# EUROPEAN PATENT SPECIFICATION

(11) **EP 4 425 334 B1**
(45) Date of publication and mention of the grant of the patent: **01.04.2026**
(21) Application number: 22897888.8
(22) Date of filing: 24.11.2022
(51) Int. Cl.: G06F 9/54, G06F 3/06

(54) **STORAGE CONTROL METHOD, STORAGE CONTROLLER, STORAGE CHIP, NETWORK CARD, AND READABLE MEDIUM**
SPEICHERSTEUERUNGSVERFAHREN, SPEICHERSTEUERUNG, SPEICHERCHIP, NETZWERKKARTE UND LESBARES MEDIUM
PROCÉDÉ DE COMMANDE DE STOCKAGE, CONTRÔLEUR DE STOCKAGE, PUCE DE STOCKAGE, CARTE RÉSEAU ET SUPPORT LISIBLE

(30) Priority: 26.11.2021 CN 202111421847
(43) Date of publication of application: 04.09.2024
(73) Proprietor: ZTE Corporation, Shenzhen, Guangdong 518057 (CN)
(72) Inventor: DAI, Shuzhou, Shenzhen, Guangdong 518057 (CN); YAN, Lin, Shenzhen, Guangdong 518057 (CN); LIU, Qiangjun, Shenzhen, Guangdong 518057 (CN); WANG, Jun, Shenzhen, Guangdong 518057 (CN); LIAO, Zhijia, Shenzhen, Guangdong 518057 (CN); YU, Feng, Shenzhen, Guangdong 518057 (CN)
(74) Representative: Canzler & Bergmeier Patentanwälte Partnerschaft mbB
(86) International application number: PCT/CN2022/134035
(87) International publication number: WO 2023/093805

(56) References cited:
- CN-A- 1 527 552
- CN-A- 1 656 754
- CN-A- 109 450 816
- US-A1- 2016 364 179
- US-A1- 2019 339 905
- US-A1- 2019 339 905

## Description

### TECHNICAL FIELD

The present disclosure relates to the storage field.

### BACKGROUND

Non-Volatile Memory Express (NVME) is a communication protocol for storage devices, and mainly provides interface specifications for Solid State Disks (SSDs).

The NVME has the characteristic of managing a storage controller through a plurality of queues, that is, a plurality of channels can be constructed between a host and an SSD for command transmission and data exchange, and carriers corresponding to the channels are the queues. In an NVME system, information interaction between the host and the SSD relies on management of commands in the queues. Existence of the plurality of queues enables the host to concurrently perform command management processes such as command submission and command processing by using multiple cores or multiple threads.

However, storage performance of an NVME-based storage system is desired to be improved.

Document US 2016/364179 A1 relates to a method for command queuing including receiving a queued command request at a memory system from a host.

### SUMMARY

Embodiments of the present disclosure provide a storage control method, a storage controller, a storage chip, a network card, and a computer-readable medium.

### BRIEF DESCRIPTION OF DRAWINGS

FIG. 1 is a flowchart of a storage control method according to an embodiment of the present disclosure;
FIG. 2 is a schematic diagram of a queue according to an embodiment of the present disclosure;
FIG. 3 is a flowchart of a storage control method according to an embodiment of the present disclosure;
FIG. 4 is a schematic diagram of queue management according to an embodiment of the present disclosure;
FIG. 5 is a flowchart of a storage control method according to an embodiment of the present disclosure;
FIG. 6 is a flowchart of a storage control method according to an embodiment of the present disclosure;
FIG. 7 is a flowchart of a storage control method according to an embodiment of the present disclosure;
FIG. 8 is a flowchart of a storage control method according to an embodiment of the present disclosure;
FIG. 9 is a flowchart of some operations in a storage control method according to an embodiment of the present disclosure;
FIG. 10 is a constituent block diagram of a storage controller according to an embodiment of the present disclosure;
FIG. 11 is a constituent block diagram of a storage chip according to an embodiment of the present disclosure;
FIG. 12 is a constituent block diagram of a network card according to an embodiment of the present disclosure;
FIG. 13 is a constituent block diagram of a computer-readable medium according to an embodiment of the present disclosure;
FIG. 14 is a flowchart illustrating management of a plurality of queues according to an example of the present disclosure.
FIG. 15 is an architecture diagram of management of a plurality of queues according to an example of the present disclosure; and
FIG. 16 is an architecture diagram of management of a plurality of queues according to an example of the present disclosure.

### DETAIL DESCRIPTION OF EMBODIMENTS

In order to enable those of ordinary skill in the art to better understand the technical solutions of the present disclosure, a storage control method, a storage controller, a storage chip, a network card, and a computer-readable medium provided by the present disclosure are described in detail below with reference to the accompanying drawings.

Exemplary embodiments will be described more fully below with reference to the accompanying drawings, but the exemplary embodiments illustrated may be implemented in different forms, and should not be interpreted as being limited to the embodiments described below. Rather, the embodiments are provided to make the present disclosure thorough and complete, and are intended to enable those of ordinary skill in the art to fully understand the present disclosure.

All the embodiments of the present disclosure and the features therein may be combined with each other if no conflict is incurred.

The term "and/or" used herein includes any and all combinations of one or more associated listed items.

The terms used herein are merely used to describe particular embodiments, and are not intended to limit the present disclosure. The terms "a" and "the" used herein which indicate a singular form are intended to include a plural form, unless expressly stated in the context. It should be further understood that the terms "include" and/or "be made of" used herein indicate the presence of the described features, integers, steps, operations, elements and/or components, but do not exclude the presence or addition of one or more other features, integers, steps, operations, elements, components and/or combinations thereof.

Unless otherwise defined, all the terms (including technical and scientific terms) used herein have the same meaning as commonly understood by those of ordinary skill in the art. It should be further understood that terms, such as those defined in commonly used dictionaries, should be interpreted as having a meaning that is consistent with a meaning in the context of the related technology and the background of the present disclosure, and should not be interpreted in an idealized or overly formal sense unless expressly so defined herein.

In an NVME-based storage system, a process of storage interaction between a host and a storage controller includes: the host sends a management message to the storage controller, and the storage controller creates a plurality of queues according to the management message; after generating a storage command, the host sends a queue request message to the storage controller; the storage controller responds to the queue request message and sends a command acquisition request to the host; the host transmits the storage command to the storage controller according to the command acquisition request; and the storage controller performs subsequent processing according to the storage command.

With development of the technology, a number of the queues between the host and the storage controller keeps growing. For example, in the field of the virtualization technology, a plurality of virtualized storage devices may be constructed and presented between the host and a user, and each virtualized storage device may be corresponding to one Virtual Function (VF) in the host. Each VF may be bound to a corresponding storage controller, and performs storage interaction with the bound storage controller through a plurality of queues, and the plurality of VFs may correspond to a large number of queues. Efficiency of acquiring storage commands from the host by the storage controller becomes an important factor which restricts storage performance of the storage system, and management of the large number of queues is an important factor which affects the efficiency of acquiring the storage commands from the host by the storage controller.

In some related technologies, for each queue request message sent by the host, the storage controller separately makes a respond and sends a command acquisition request. For a plurality of queue request messages, the storage controller sequentially and serially respond to queue request messages according to an order in which the queue request messages arrive at the storage controller.

It is found by research that when there are the large number of queues, queue request messages for different queues are frequently sent from the host, and a large number of command acquisition requests are usually generated during a process from responding to the queue request messages to initiating acquisition of storage commands from the host by the storage controller. A Direct Memory Access (DMA) component and a data bus serially process the command acquisition requests sent from the storage controller to the host, which may easily cause blockage and timeout of the command acquisition requests of a storage control system. Moreover, since the storage controller sends one command acquisition request for each queue request message, the DMA component initiates one command data transfer for each command acquisition request, and a number of storage commands corresponding to each queue request message is usually small, a number of storage commands acquired from the host in unit time is relatively small, and efficiency of acquiring the storage commands from the host by the storage controller is very low.

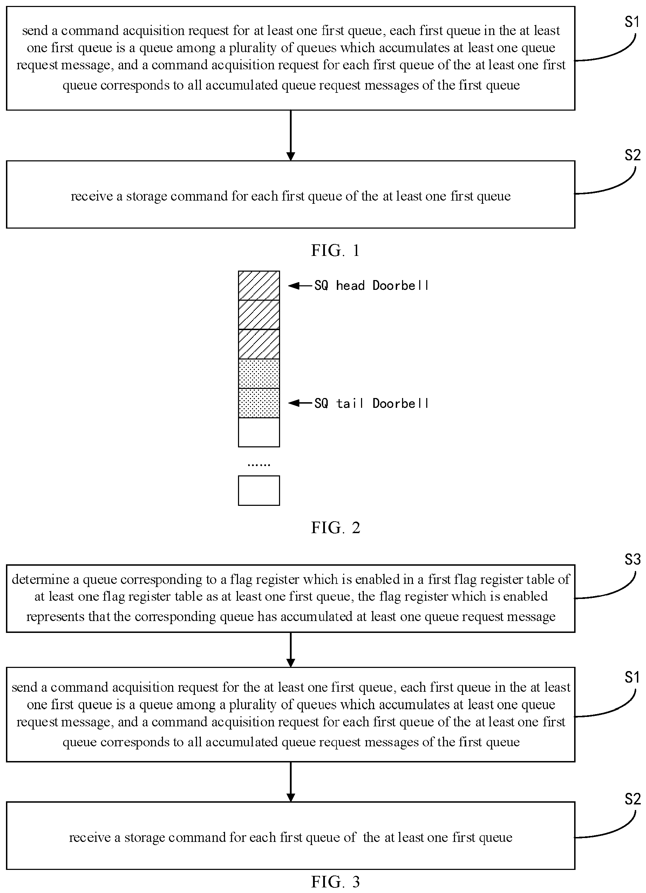

FIG. 1 is a flowchart of a storage control method according to an embodiment of the present disclosure, and the storage control method includes operations S1 and S2.

At operation S1, a command acquisition request for at least one first queue is sent, the at least one first queue is a queue among a plurality of queues which accumulates at least one queue request message, and a command acquisition request for each first queue of the at least one first queue corresponds to all accumulated queue request messages of the first queue.

At operation S2, a storage command for each first queue of the at least one first queue is received.

In the embodiments of the present disclosure, a storage controller accumulates queue request messages for the plurality of queues through an accumulation process before operation S1 is performed. It should be noted that an accumulated queue request message of a queue refers to a queue request message which is sent for the queue by the host and received by the storage controller during the accumulation process. For example, for any queue, when the storage controller receives one or more queue request messages for the queue during the accumulation process, the one or more queue request messages are accumulated queue request messages of the queue.

Accordingly, in the embodiments of the present disclosure, when receiving a queue request message sent by the host for any queue, the storage controller does not directly respond to the queue request message for the queue, but performs operation S1 to, for any first queue, uniformly respond to the at least one accumulated queue request message of the first queue with one command acquisition request. Therefore, in the embodiments of the present disclosure, one command acquisition request may correspond to one queue request message for one queue, or may correspond to a plurality of queue request messages for one queue. When operation S1 is performed, a command acquisition request for each of a plurality of first queues may correspond to a plurality of queue request messages, or a command acquisition request for each of part of the first queues may correspond to one queue request message and a command acquisition request for each of the remaining first queues may correspond to a plurality of queue request messages. Compared with the method in which one command acquisition request is sent for each queue request message, the method according to the embodiments of the present disclosure can reduce the number of command acquisition requests, and further reduce a number of times of transferring of the storage commands from the host by the DMA component.

In the embodiments of the present disclosure, when a command acquisition request for one queue corresponds to a plurality of queue request messages of the queue, the host may send storage commands corresponding to all the queue request messages of the queue to the storage controller according to the command acquisition request, which can increase the number of the storage commands acquired from the host by the DMA component in one-time transfer.

It should be further noted that, in the embodiments of the present disclosure, the storage controller does not respond to the queue request messages in strict accordance with an order of receiving the queue request messages. By accumulating the queue request messages and then sending the command acquisition request to respond to the queue request messages by performing operation S1, all the received queue request messages can be responded to, thereby avoiding response omission and response delay.

In the storage control method provided by the embodiments of the present disclosure, the storage controller first accumulates the received queue request messages and uniformly respond to the accumulated at least one queue request messages; and for any queue, the storage commands corresponding to a plurality of queue request messages of the queue can be acquired by sending one command acquisition request. Thus, the number of the storage commands acquired from the host by the DMA component in one-time transfer can be increased, the number of times of transferring of the storage commands from the host by the DMA component can be reduced, blockage and timeout caused when the storage controller acquires the storage commands from the host can be avoided, the efficiency of acquiring the storage commands can be increased, and storage performance of a storage system can be improved.

How to accumulate the queue request messages is not particularly limited in the embodiments of the present disclosure. In some embodiments, the storage controller maintains a flag register table for storing flag register information of each queue, and the flag register information of each queue is configured to represent whether the storage controller receives a queue request message for the queue. In the accumulation process, each time the storage controller receives a queue request message for a queue, the storage controller enables a flag register corresponding to the queue, and the flag register which is enabled represents that the queue request message for the queue is received and also represents that the queue has accumulated at least one queue request message.

FIG. 2 is a schematic diagram of a queue between the host and the storage controller according to an embodiment of the present disclosure. As shown in FIG. 2, a queue is also called a storage Submission Queue (SQ), and one SQ is equivalent to an area in a memory, and includes a head pointer "SQ head Doorbell" and a tail pointer "SQ tail Doorbell". The storage controller updates the tail pointer "SQ tail Doorbell" after receiving a queue request message for the SQ, and updates the head pointer "SQ head Doorbell" after acquiring and processing a storage command. For example, assuming that the tail pointer "SQ tail Doorbell" = the head pointer "SQ head Doorbell" = 0, the host generates three storage commands and sends queue request messages to the storage controller, and the storage controller updates the tail pointer "SQ tail Doorbell" of the queue according to the queue request messages, at this time, the head pointer "SQ head Doorbell" = 0 and the tail pointer "SQ tail Doorbell" = 3; and after the storage controller sends a command acquisition message, acquires the three storage commands from the host, and executes the three storage commands, the storage controller updates the head pointer "SQ head Doorbell", at this time, the head pointer "SQ head Doorbell" = 3 and the tail pointer "SQ tail Doorbell" = 3.

In the embodiments of the present disclosure, before operation S1 is performed, the storage controller does not respond to the received queue request messages, and the queue request messages received by the storage controller are accumulated according to a mechanism illustrated by FIG. 2. For example, assuming that the tail pointer "SQ tail Doorbell" = the head pointer "SQ head Doorbell" = 0 in an initial phase, in a first phase, the host generates the three storage commands for the queue and sends the queue request messages to the storage controller, the storage controller updates the tail pointer "SQ tail Doorbell" of the queue according to the queue request messages, at this time, the head pointer "SQ head Doorbell" = 0 and the tail pointer "SQ tail Doorbell" = 3; and in a second phase, the host generates two storage commands for the queue and sends queue request messages to the storage controller, and the storage controller updates the tail pointer "SQ tail Doorbell" of the queue according to the queue request messages, at this time, the head pointer "SQ head Doorbell" = 0 and the tail pointer "SQ tail Doorbell" = 5,..., thus realizing the accumulation of the queue request messages.

In some embodiments, the storage controller may determine the queue (i.e., the first queue) which has accumulated the at least one queue request message based on the flag register table, and then initiate a response.

FIG. 3 is a flowchart of a storage control method according to an embodiment of the present disclosure.

Referring to FIG. 3, the storage control method further includes operation S3 before operations S1 and S2.

At operation S3, a queue corresponding to a flag register which is enabled in a first flag register table of at least one flag register table is determined as the at least one first queue, each flag register table of the at least one flag register table includes a plurality of flag registers respectively corresponding to the plurality of queues, and the flag register which is enabled represents that the corresponding queue has accumulated the at least one queue request message.

In the embodiments of the present disclosure, the storage controller may maintain one flag register table, or may maintain a plurality of flag register tables, which is not particularly limited in the embodiments of the present disclosure.

In some embodiments, the storage controller maintains two flag register tables, and alternately accumulating and responds based on the two flag register tables, which is also known as PING-PONG rotation switching between the two flag register tables. It should be noted that accumulating based on a flag register table refers to: when the storage controller receives a queue request message for a queue, enabling a flag register corresponding to the queue in the flag register table; and responding based on a flag register table refers to: performing operations S3, S1 and S2 to respond to an accumulated queue request message of a queue corresponding to a flag register which is enabled in the flag register table, generate a command acquisition request, and acquire a storage command from the host.

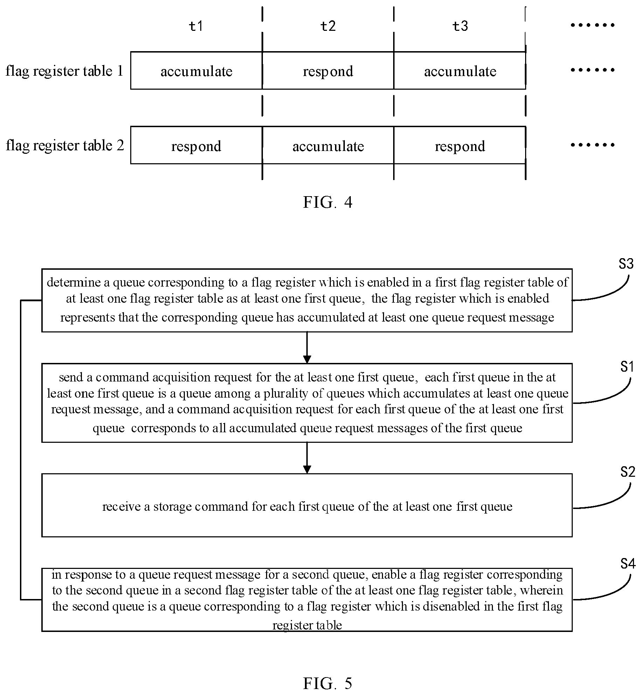

FIG. 4 is a schematic diagram of queue management according to an embodiment of the present disclosure. FIG. 4 is a schematic diagram of alternately accumulating and responding for one queue based on two flag register tables. As shown in FIG. 4, at time t1, accumulating is based on a flag register table 1, and responding is based on a flag register table 2; at time t2, responding is based on the flag register table 1, and accumulating is based on the flag register table 2; and at time t3, accumulating is based on the flag register table 1, and responding is based on the flag register table 2.

FIG. 5 is a flowchart of a storage control method according to an embodiment of the present disclosure.

Referring to FIG. 5, the storage control method further includes operation S4.

At operation S4, in response to a queue request message for a second queue, a flag register corresponding to the second queue in a second flag register table of the at least one flag register table is enabled, and the second queue is a queue corresponding to a flag register which is disenabled in the first flag register table.

In the embodiments of the present disclosure, for any flag register table, when responding is made based on the flag register table, the flag register table is used as the first flag register table; and when accumulating is based on the flag register table, the flag register table is used as the second flag register table.

In the embodiments of the present disclosure, the queue request messages can be totally accumulated based on the second flag register table while responding based on the first flag register table, so that the number of queue request messages corresponding to a single command acquisition request can be further increased, thereby increasing the number of the storage commands acquired in a single storage command transfer, reducing the number of transfer times, and improving the storage performance. In addition, with the queue request messages totally accumulated based on the second flag register table while responding based on the first flag register table, omission of the queue request messages can be avoided.

In the embodiments of the present disclosure, when responding based on the first flag register table, if a queue request message for the first queue is received before the command acquisition request for the first queue is sent, the accumulating of the queue request messages for the first queue is continued based on the first flag register table; and if the queue request message for the first queue is received after the command acquisition request for the first queue is sent, the queue request message for the first queue is accumulated based on the second flag register table.

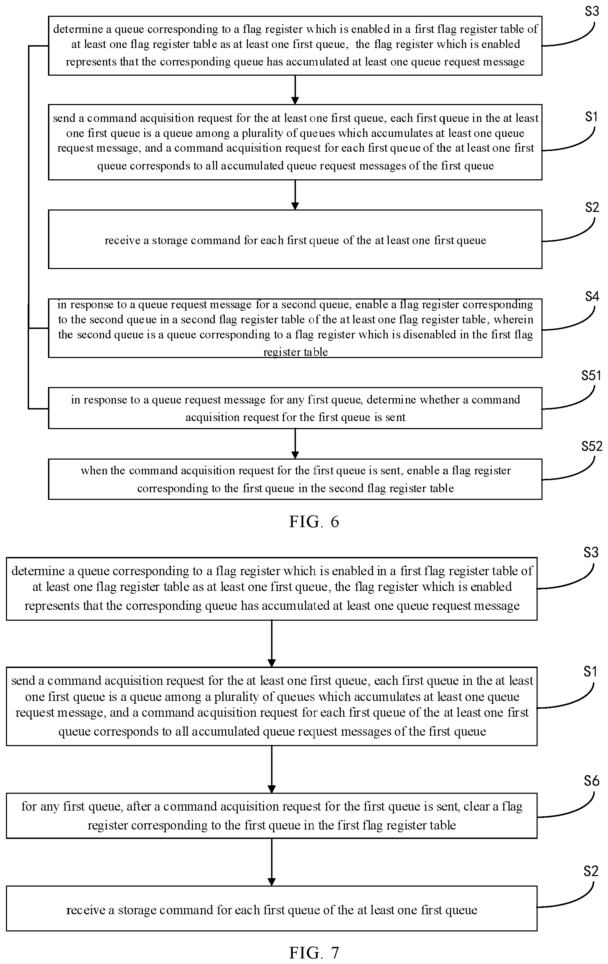

FIG. 6 is a flowchart of a storage control method according to an embodiment of the present disclosure.

Referring to FIG. 6, the storage control method further includes operations S51 and S52.

At operation S51, in response to a queue request message for any first queue, it is determined whether a command acquisition request for the first queue is sent.

At operation S52, when the command acquisition request for the first queue is sent, a flag register corresponding to the first queue in the second flag register table is enabled.

Through the operations S51 and S52, efficiency of responding to the queue request messages can be increased, and omission of the queue request messages can be avoided.

It should be noted that, as shown in FIG. 2, when responding based on the first flag register table, if the queue request message for the first queue is received before the command acquisition request for the first queue is sent, the tail pointer "SQ tail Doorbell" is updated; and when sending the command acquisition request, the command acquisition request is generated based on the updated tail pointer "SQ tail Doorbell", that is, the queue request message for the first queue which is received before the command acquisition request for the first queue is sent is accumulated based on the first flag register table.

In some embodiments, when responding based on the first flag register table, after the command acquisition request for the first queue is sent, the flag register corresponding to the first queue in the first flag register table is cleared, so as to allow the flag register table used as the first flag register table to be alternately used as the second flag register table.

FIG. 7 is a flowchart of a storage control method according to an embodiment of the present disclosure.

Referring to FIG. 7, the storage control method further includes operation S6 after operation S1.

At operation S6, for any first queue, after a command acquisition request for the first queue is sent, a flag register corresponding to the first queue in the first flag register table is cleared.

In some embodiments, when alternately accumulating and responding based on the two flag register tables, the two flag register tables are switched according to a predetermined cycle. In some embodiments, when alternately accumulating and responding based on the two flag register tables, the switching is carried out when all flag registers in the first flag register table are cleared, thus realizing the PING-PONG rotation switching.

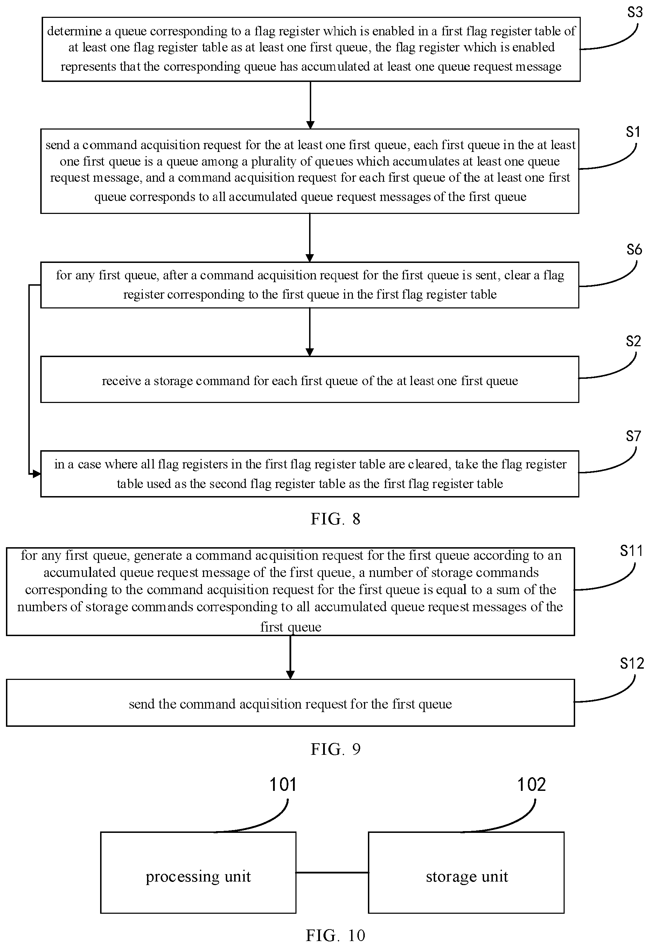

FIG. 8 is a flowchart of a storage control method according to an embodiment of the present disclosure.

Referring to FIG. 8, the storage control method further includes operation S7.

At operation S7, in a case where all the flag registers in the first flag register table are cleared, the flag register table used as the second flag register table is taken as the first flag register table.

In the embodiments of the present disclosure, the storage controller may respond to the plurality of first queues at the same time, or may respond to the plurality of first queues one by one, which is not particularly limited in the embodiments of the present disclosure.

FIG. 9 is a flowchart of some operations in a storage control method according to an embodiment of the present disclosure.

Referring to FIG. 9, when responding to the plurality of first queues one by one, operation S1 includes operations S11 and S12.

At operation S11, for any first queue, a command acquisition request for the first queue is generated according to an accumulated queue request message of the first queue, and a number of storage commands corresponding to the command acquisition request for the first queue is equal to a sum of the numbers of storage commands corresponding to all accumulated queue request messages of the first queue.

At operation S12, the command acquisition request for the first queue is sent.

How to respond to the plurality of first queues one by one is not particularly limited in the embodiments of the present disclosure. In some embodiments, the plurality of first queues between the storage controller and the host are numbered, and the plurality of first queues is responded to one by one in an order of an order of the numbered plurality of first queues. In some embodiments, the plurality of queues between the storage controller and the host have different priority levels, and the plurality of queues is responded to one by one in an order of the priority levels of the plurality of queues. In some embodiments, responding may be made in a randomly selected and determined order of the plurality of first queues.

FIG. 10 is a constituent block diagram of a storage controller according to an embodiment of the present disclosure.

Referring to FIG. 10, the storage controller includes one or more processing units 101 and a storage unit 102.

The storage unit 102 has stored thereon one or more programs which, when executed by the one or more processing units 101, cause the one or more processing units 101 to implement the storage control methods described above.

The processing unit 101 is a device having data processing capability, and includes, but is not limited to, a Central Processing Unit (CPU); and the storage unit 102 is a device having data storage capability, and includes, but is not limited to, a Random Access Memory (RAM, more specifically, a Synchronous Dynamic RAM (SDRAM), a Double Data Rate SDRAM (DDR SDRAM), etc.), a Read-Only Memory (ROM), an Electrically Erasable Programmable Read-Only Memory (EEPROM), and a flash memory (FLASH).

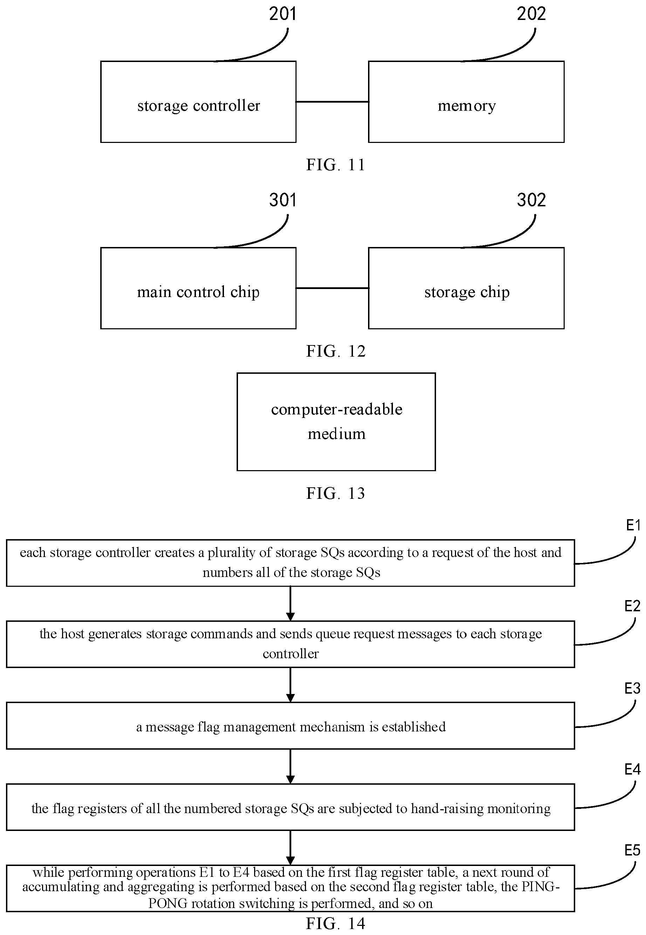

FIG. 11 is a constituent block diagram of a storage chip according to an embodiment of the present disclosure.

Referring to FIG. 11, the storage chip includes: a storage controller 201 and a memory 202.

The storage controller 201 may be the storage controller described with reference to FIG. 10.

In some embodiments, the storage chip is a storage acceleration chip.

FIG. 12 is a constituent block diagram of a network card according to an embodiment of the present disclosure.

Referring to FIG. 12, the network card includes a main control chip 301 and a storage chip 302.

The storage chip 302 includes the storage controller described with reference to FIG. 10.

In some embodiments, the network card is a storage-acceleration smart network card.

FIG. 13 is a constituent block diagram of a computer-readable medium according to an embodiment of the present disclosure.

Referring to FIG. 13, the computer-readable medium has stored thereon a computer program which, when executed by a processor, implements the storage control methods described above.

In order to enable those of ordinary skill in the art to understand the technical solutions provided by the embodiments of the present disclosure more clearly, the technical solutions provided by the embodiments of the present disclosure are illustrated in detail below by specific examples.

### Example One

In this example, the storage control system includes a plurality of storage controllers. FIG. 14 is a flowchart illustrating management of a plurality of queues according to an example of the present disclosure. Referring to FIG. 14, an interaction process for managing a plurality of storage SQs between the storage controllers and the host includes operations E1 to E5.

At E1, each storage controller creates a plurality of storage SQs according to a request of the host and numbers all of the storage SQs.

After the host initializes the storage controllers in the storage control system, the host sends a management message to each storage controller for creating the plurality of storage SQs. Each storage controller acquires a corresponding management command from the host according to the management message, creates the plurality of storage SQs according to the management command, and sequentially numbers the plurality of storage SQs.

At operation E2, the host generates storage commands and sends queue request messages to each storage controller.

After each storage controller creates the storage SQs, the host generates the storage commands and stores the storage commands in address spaces corresponding to the storage SQs in the host, and at the same time, the host sends the queue request messages to each storage controller.

At operation E3, a message flag management mechanism is established.

Each storage controller maintains the flag register tables, creates message flag registers corresponding to all the storage SQs created by the storage controller, and enables flag registers of the storage SQs corresponding to the received queue request messages according to the received queue request messages, that is, each time the storage controller receives one queue request message, the storage controller enables a flag register of a corresponding storage SQ (for example, set the flag register to 1).

At operation E4, the flag registers of all the numbered storage SQs are subjected to hand-raising monitoring.

Each storage controller takes a storage SQ, which is found to have a hand-raising action through the monitoring (a corresponding flag register is 1), as a first queue, responds to the plurality of storage SQs according to an order of the numbered storage SQs, transfers the storage commands from the host to the storage controller, and clear the corresponding flag registers after the storage commands are transferred.

At operation E5, while performing operations E1 to E4 based on the first flag register table, a next round of accumulating and aggregating is performed based on the second flag register table, the PING-PONG rotation switching is performed, and so on.

### Example Two

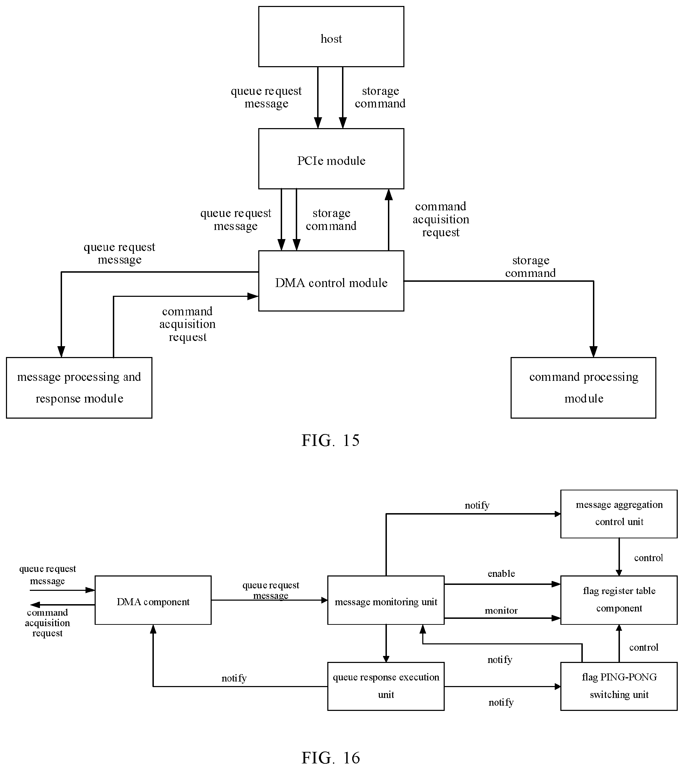

FIG. 15 is an architecture diagram of management of a plurality of queues according to an example of the present disclosure. FIG. 15 is a schematic architecture diagram of a storage controller and a host. As shown in FIG. 15, a process of performing management interaction on a plurality of storage SQs includes the following operations.

The host sends a queue request message, i.e., a Doorbell message, and the queue request message is transmitted to a message processing and response module in the storage controller through a Peripheral Component Interconnect express (PCIe) module and a DMA control module.

The message processing and response module sends a command acquisition request for a corresponding storage SQ to the host through the DMA control module and the PCIe module.

The host may generate, according to the command acquisition request, a PCIe packet including a storage command for the corresponding storage SQ, and the PCIe packet is transmitted to a command processing module in the storage controller through the PCIe module and the DMA control module for subsequent processing.

### Example Three

FIG. 16 is an architecture diagram of management of a plurality of queues according to an example of the present disclosure. FIG. 16 is a schematic architecture diagram of performing management interaction on a plurality of storage SQs. In this embodiment, the storage control system includes a plurality of storage controllers.

The host may initialize each storage controller in the storage control system through the DMA component, and each storage controller creates a plurality of storage SQs. After the storage SQs are created, the host sends queue request messages (Doorbell messages) corresponding to the storage SQs to each storage controller in the storage control system, and the Doorbell messages are transmitted to message monitoring units of the corresponding storage controllers.

Each storage controller assigns a corresponding number to each created storage SQ in a flag register table component. For example, if 2048 storage SQs are created, the corresponding numbers are 0 to 2047, each number is corresponding to a unique SQ, and each SQ has one flag register, a flag register being 1 indicates that an update of a Doorbell message is performed, and a flag bit being 0 indicates that there is no update of a Doorbell message. Each time a message monitoring unit monitors that an update of a Doorbell message is performed for a corresponding storage SQ, the flag register corresponding to the storage SQs is set to 1.

The message monitoring unit monitors and judges that the 2048 flag registers concurrently. If there is a plurality of flag registers being 1, the storage controller responds to the storage SQs whose flag registers are 1. The 2048 flag registers form the flag register table component.

For each SQ whose flag register is found to be 1 through the monitoring, a queue response execution unit compares a value of "SQ tail Doorbell" corresponding to the SQ with a value of "SQ head Doorbell" corresponding to the SQ to generate a command acquisition request, and sends the command acquisition request to the host, then a storage command is transferred from the host to the storage controller through the DMA component, and at the same time, the flag register table component is informed to clear the flag register of the SQ.

In this example, a PING-PONG rotation switching design is adopted, and two flag register tables are designed and are respectively denoted as Table A and Table B. In a first round, the message monitoring unit monitors the Table A in the flag register table component; for a first queue whose flag register is 1 in the Table A, if an update of a new Doorbell message needs to be performed for the first queue before a command acquisition request for the first queue is sent, accumulation and aggregation of the doorbell messages of the first queue may be continued based on the Table A and are managed by a message aggregation control unit. While responding based on the Table A, if an update of a Doorbell message needs to be performed for a second queue whose flag register in the Table A is not 1, the flag register of the second queue in the Table B is set to 1; and if a plurality of Doorbell messages are continuously issued for individual second queues, accumulation and aggregation of the Doorbell messages of the individual second queues are performed based on the Table B. When all the flag registers in the Table A are cleared, a flag PING-PONG switching unit controls the switching from the Table A to the Table B and informs the message monitoring unit to monitor the Table B in a next round, thus realizing switching from a PING round to a PONG round. After the flag registers in the Table B are processed, the Table A is processed in a next round, thus realizing switching from the PONG round to the PING round. In this way, the Table A and the Table B are subjected to the PING-PONG switching and the switching is repeated cyclically. With all the above operations, no new Doorbell messages of the corresponding SQs are missed, and the Doorbell messages can be accumulated and the aggregated to the greatest extent.

After the queue response execution unit is notified by the message monitoring unit, the queue response execution unit may send a command acquisition request corresponding to each storage SQ that is subjected to full accumulation and aggregation of the Doorbell messages to the DMA component, and the DMA component then initiates a command acquisition operation to the host and acquires a storage command.

In this example, the number of transfer times of the DMA component can be reduced, and the number of the storage commands transferred by the DMA component in a single transfer can be increased, so that the efficiency of acquiring the storage commands can be increased, and the storage performance can be improved.

It should be understood by those of ordinary skill in the art that the functional modules/units in all or some of the operations, the systems and the devices in the method disclosed above may be implemented as software, firmware, hardware, or suitable combinations thereof. If implemented as hardware, the division between the functional modules/units stated above is not necessarily corresponding to the division of physical components; for example, one physical component may have a plurality of functions, or one function or operation may be performed through cooperation of several physical components. Some or all of the physical components may be implemented as software executed by a processor, such as a central processing unit, a digital signal processor or a microprocessor, or may be implemented as hardware, or may be implemented as an integrated circuit, such as an application specific integrated circuit. Such software may be distributed on a computer-readable medium, which may include a computer storage medium (or a non-transitory medium) and a communication medium (or a transitory medium). As well known by those of ordinary skill in the art, the term "computer storage medium" includes volatile/nonvolatile and removable/non-removable media used in any method or technology for storing information (such as computer-readable instructions, data structures, program modules and other data). The computer storage medium includes, but is not limited to, an RAM, an ROM, an EEPROM, a flash memory or other memory techniques, a Compact Disc Read Only Memory (CD-ROM), a Digital Versatile Disc (DVD) or other optical discs, a magnetic cassette, a magnetic tape, a magnetic disk or other magnetic storage devices, or any other medium which can be configured to store desired information and can be accessed by a computer. In addition, it is well known by those of ordinary skill in the art that the communication media generally include computer-readable instructions, data structures, program modules, or other data in modulated data signals such as carrier wave or other transmission mechanism, and may include any information delivery medium.

## Claims

1. A storage control method applied to a storage controller, comprising:
receiving, from a host, queue request messages for a plurality of queues, and accumulating, in each queue of the plurality of queues, all queue request messages for the queue among the received queue request messages;
sending, to the host, one command acquisition request for each first queue of at least one first queue, wherein each first queue of the at least one first queue is a queue among the plurality of queues which accumulates at least one queue request message, and the one command acquisition request for each first queue of the at least one first queue corresponds to all accumulated queue request messages of the first queue (S1); and
acquiring, from the host, by a DMA component of the storage controller, for each first queue, in one-time transfer, all storage commands corresponding to all accumulated queue request messages of the first queue according to the one command acquisition request.

2. The storage control method of claim 1, wherein before sending, to the host, the one command acquisition request for each first queue of the at least one first queue (S1), the storage control method further comprises:
determining a queue corresponding to a flag register which is enabled in a first flag register table of at least one flag register table as the at least one first queue, wherein each of the at least one flag register table comprises a plurality of flag registers respectively corresponding to the plurality of queues, and the flag register which is enabled represents that the corresponding queue has accumulated the at least one queue request message (S3).

3. The storage control method of claim 2, further comprising:
in response to a queue request message for a second queue, enabling a flag register corresponding to the second queue in a second flag register table of the at least one flag register table, wherein the second queue is a queue corresponding to a flag register which is disenabled in the first flag register table (S4).

4. The storage control method of claim 3, further comprising:
in response to a queue request message for any first queue of the at least one first queue, determining whether a command acquisition request for the any first queue is sent (S51); and
when the command acquisition request for the any first queue is sent, enabling a flag register corresponding to the any first queue in the second flag register table (S52).

5. The storage control method of claim 3 or 4, wherein after sending, to the host, the one command acquisition request for each first queue of the at least one first queue (S1), the storage control method further comprises:
for any first queue of the at least one first queue, after a command acquisition request for the any first queue is sent, clearing a flag register corresponding to the any first queue in the first flag register table (S6).

6. The storage control method of claim 5, further comprising:
in a case where all flag registers in the first flag register table are cleared, taking a flag register table used as the second flag register table as the first flag register table (S7).

7. The storage control method of any one of claims 1 to 4, wherein sending, to the host, the one command acquisition request for each first queue of the at least one first queue (S1) comprises:
for any first queue of the at least one first queue, generating a command acquisition request for the any first queue according to an accumulated queue request message of the any first queue, wherein a number of storage commands corresponding to the command acquisition request for the any first queue is equal to a sum of numbers of storage commands corresponding to all accumulated queue request messages of the any first queue (S11); and
sending the command acquisition request for the any first queue (S12).

8. A storage controller, comprising:
one or more processing units (101); and
a storage unit (102) having stored thereon one or more programs which, when executed by the one or more processing units (101), cause the one or more processing units (101) to carry out the storage control method of any one of claims 1 to 7.

9. A storage chip, comprising:
the storage controller (201) of claim 8; and
a memory (202).

10. A network card, comprising:
a main control chip (301) and a storage chip (302),
wherein the storage chip (302) comprises the storage controller of claim 8.

11. A computer-readable medium storing a computer program which, when executed by a processor, cause the processor to carry out the storage control method of any one of claims 1 to 7.

## Patentansprüche

1. Verfahren zum Steuern eines Speichers, das auf eine Speicher-Steuerung angewendet wird, umfassend:
Empfangen, von einem Host, von Warteschlangen-Anforderungsnachrichten für eine Vielzahl von Warteschlangen und Akkumulieren, in jeder Warteschlange der Vielzahl von Warteschlangen, aller Warteschlangen-Anforderungsnachrichten für die Warteschlange unter den empfangenen Warteschlangen-Anforderungsnachrichten;
Senden, an den Host, einer Befehlserfassungsanforderung für jede erste Warteschlange von mindestens einer ersten Warteschlange, wobei jede erste Warteschlange der mindestens einen ersten Warteschlange eine Warteschlange unter der Vielzahl von Warteschlangen ist, die mindestens eine Warteschlangen-Anforderungsnachricht akkumuliert, und die eine Befehlserfassungsanforderung für jede erste Warteschlange der mindestens einen ersten Warteschlange allen akkumulierten Warteschlangen-Anforderungsnachrichten der ersten Warteschlange (S1) entspricht; und
Erfassen, von dem Host, durch eine DMA-Komponente der Speicher-Steuerung, für jede erste Warteschlange, in einer einmaligen Übertragung, aller Speicherbefehle entsprechend allen akkumulierten Warteschlangen-Anforderungsnachrichten der ersten Warteschlange gemäß der einen Befehlserfassungsanforderung.

2. Verfahren zum Steuern eines Speichers nach Anspruch 1, wobei vor dem Senden, an den Host, der einen Befehlserfassungsanforderung für jede erste Warteschlange der mindestens einen ersten Warteschlange (S1) das Verfahren zum Steuern eines Speichers ferner umfasst:
Bestimmen einer Warteschlange entsprechend einem Flag-Register, das in einer ersten Flag-Registertabelle von mindestens einer Flag-Registertabelle als die mindestens eine erste Warteschlange aktiviert ist, wobei jede der mindestens einen Flag-Registertabelle eine Vielzahl von Flag-Registern jeweils entsprechend der Vielzahl von Warteschlangen umfasst, und das Flag-Register, das aktiviert ist, Repräsentieren, dass die entsprechende Warteschlange die mindestens eine Warteschlangen-Anforderungsnachricht akkumuliert hat (S3).

3. Verfahren zum Steuern eines Speichers nach Anspruch 2, ferner umfassend:
als Reaktion auf eine Warteschlangen-Anforderungsnachricht für eine zweite Warteschlange, Aktivieren eines Flag-Registers entsprechend der zweiten Warteschlange in einer zweiten Flag-Registertabelle der mindestens einen Flag-Registertabelle, wobei die zweite Warteschlange eine Warteschlange entsprechend einem Flag-Register ist, das in der ersten Flag-Registertabelle deaktiviert ist (S4).

4. Verfahren zum Steuern eines Speichers nach Anspruch 3, ferner umfassend:
als Reaktion auf eine Warteschlangen-Anforderungsnachricht für eine beliebige erste Warteschlange der mindestens einen ersten Warteschlange, Bestimmen, ob eine Befehlserfassungsanforderung für die beliebige erste Warteschlange gesendet wird (S51); und
wenn die Befehlserfassungsanforderung für die beliebige erste Warteschlange gesendet wird, Aktivieren eines Flag-Registers entsprechend der beliebigen ersten Warteschlange in der zweiten Flag-Registertabelle (S52).

5. Verfahren zum Steuern eines Speichers nach Anspruch 3 oder 4, wobei nach dem Senden, an den Host, der einen Befehlserfassungsanforderung für jede erste Warteschlange der mindestens einen ersten Warteschlange (S1) das Verfahren zum Steuern eines Speichers ferner umfasst:
für eine beliebige erste Warteschlange der mindestens einen ersten Warteschlange, nach dem Senden einer Befehlserfassungsanforderung für die beliebige erste Warteschlange, Löschen eines Flag-Registers entsprechend der beliebigen ersten Warteschlange in der ersten Flag-Registertabelle (S6).

6. Verfahren zum Steuern eines Speichers nach Anspruch 5, ferner umfassend:
in einem Fall, in dem alle Flag-Register in der ersten Flag-Registertabelle gelöscht sind, Nehmen einer Flag-Registertabelle, die als die zweite Flag-Registertabelle verwendet wird, als die erste Flag-Registertabelle (S7).

7. Verfahren zum Steuern eines Speichers nach einem der Ansprüche 1 bis 4, wobei das Senden, an den Host, der einen Befehlserfassungsanforderung für jede erste Warteschlange der mindestens einen ersten Warteschlange (S1) umfasst:
für eine beliebige erste Warteschlange der mindestens einen ersten Warteschlange, Erzeugen einer Befehlserfassungsanforderung für die beliebige erste Warteschlange gemäß einer akkumulierten Warteschlangen-Anforderungsnachricht der beliebigen ersten Warteschlange, wobei eine Anzahl von Speicherbefehlen entsprechend der Befehlserfassungsanforderung für die beliebige erste Warteschlange gleich einer Summe von Anzahlen von Speicherbefehlen entsprechend allen akkumulierten Warteschlangen-Anforderungsnachrichten der beliebigen ersten Warteschlange (S11) ist; und
Senden der Befehlserfassungsanforderung für die beliebige erste Warteschlange (S12).

8. Speicher-Steuerung, umfassend:
eine oder mehrere Verarbeitungseinheiten (101); und
eine Speichereinheit (102), auf der ein oder mehrere Programme gespeichert sind, die bei Ausführung durch die eine oder die mehreren Verarbeitungseinheiten (101) bewirken, dass die eine oder die mehreren Verarbeitungseinheiten (101) das Verfahren zum Steuern eines Speichers nach einem der Ansprüche 1 bis 7 ausführen.

9. Speicher-Chip, umfassend:
die Speicher-Steuerung (201) nach Anspruch 8; und
einen Speicher (202).

10. Netzwerk-Karte, umfassend:
einen Haupt-Steuerungschip (301) und einen Speicher-Chip (302),
wobei der Speicher-Chip (302) die Speicher-Steuerung nach Anspruch 8 umfasst.

11. Computerlesbares Medium zum Speichern eines Computerprogramms, das bei Ausführung durch einen Prozessor bewirkt, dass der Prozessor das Verfahren zum Steuern eines Speichers nach einem der Ansprüche 1 bis 7 ausführt.

## Revendications

1. Procédé de contrôle de stockage appliqué à un contrôleur de stockage, comprenant les étapes consistant à :
recevoir, à partir d'un hôte, des messages de demande de file d'attente pour une pluralité de files d'attente, et accumuler, dans chaque file d'attente de la pluralité de files d'attente, tous les messages de demande de file d'attente pour la file d'attente parmi les messages de demande de file d'attente reçus ;
transmettre, à l'hôte, une demande d'acquisition de commande pour chaque première file d'attente d'au moins une première file d'attente, dans lequel chaque première file d'attente de l'au moins une première file d'attente est une file d'attente parmi la pluralité de files d'attente qui accumule au moins un message de demande de file d'attente, et la demande d'acquisition de commande pour chaque première file d'attente de l'au moins une première file d'attente correspond à tous les messages de demande de file d'attente accumulés de la première file d'attente (S1) ; et
acquérir, à partir de l'hôte, par un composant DMA du contrôleur de stockage, pour chaque première file d'attente, en un transfert à usage unique, toutes les commandes de stockage correspondant à tous les messages de demande de file d'attente accumulés de la première file d'attente selon la demande d'acquisition de commande.

2. Procédé de contrôle de stockage selon la revendication 1, dans lequel avant de transmettre, à l'hôte, la demande d'acquisition de commande pour chaque première file d'attente de l'au moins une première file d'attente (S1), le procédé de contrôle de stockage comprend en outre les étapes consistant à :
déterminer une file d'attente correspondant à un registre de drapeau qui est activé dans une première table de registres de drapeau d'au moins une table de registres de drapeau comme l'au moins une première file d'attente, dans lequel chacune de l'au moins une table de registres de drapeau comprend une pluralité de registres de drapeau correspondant respectivement à la pluralité de files d'attente, et le registre de drapeau qui est activé représente que la file d'attente correspondante a accumulé l'au moins un message de demande de file d'attente (S3).

3. Procédé de contrôle de stockage selon la revendication 2, comprenant en outre les étapes consistant à :
en réponse à un message de demande de file d'attente pour une seconde file d'attente, activer un registre de drapeau correspondant à la seconde file d'attente dans une seconde table de registres de drapeau de l'au moins une table de registres de drapeau, dans lequel la seconde file d'attente est une file d'attente correspondant à un registre de drapeau qui est désactivé dans la première table de registres de drapeau (S4).

4. Procédé de contrôle de stockage selon la revendication 3, comprenant en outre les étapes consistant à :
en réponse à un message de demande de file d'attente pour une première file d'attente quelconque de l'au moins une première file d'attente, déterminer si une demande d'acquisition de commande pour la première file d'attente quelconque est transmise (S51) ; et
lorsque la demande d'acquisition de commande pour la première file d'attente quelconque est transmise, activer un registre de drapeau correspondant à la première file d'attente quelconque dans la seconde table de registres de drapeau (S52).

5. Procédé de contrôle de stockage selon la revendication 3 ou 4, dans lequel après avoir transmis, à l'hôte, la demande d'acquisition de commande pour chaque première file d'attente de l'au moins une première file d'attente (S1), le procédé de contrôle de stockage comprend en outre les étapes consistant à :
pour une première file d'attente quelconque de l'au moins une première file d'attente, après qu'une demande d'acquisition de commande pour la première file d'attente quelconque a été transmise, effacer un registre de drapeau correspondant à la première file d'attente quelconque dans la première table de registres de drapeau (S6).

6. Procédé de contrôle de stockage selon la revendication 5, comprenant en outre les étapes consistant à :
dans un cas où tous les registres de drapeau dans la première table de registres de drapeau sont effacés, prendre une table de registres de drapeau utilisée comme seconde table de registres de drapeau comme première table de registres de drapeau (S7).

7. Procédé de contrôle de stockage selon l'une quelconque des revendications 1 à 4, dans lequel transmettre, à l'hôte, la demande d'acquisition de commande pour chaque première file d'attente de l'au moins une première file d'attente (S1) comprend les étapes consistant à :
pour une première file d'attente quelconque de l'au moins une première file d'attente, générer une demande d'acquisition de commande pour la première file d'attente quelconque selon un message de demande de file d'attente accumulé de la première file d'attente quelconque, dans lequel un nombre de commandes de stockage correspondant à la demande d'acquisition de commande pour la première file d'attente quelconque est égal à une somme de nombres de commandes de stockage correspondant à tous les messages de demande de file d'attente accumulés de la première file d'attente quelconque (S11) ; et
transmettre la demande d'acquisition de commande pour la première file d'attente quelconque (S12).

8. Contrôleur de stockage, comprenant :
une ou plusieurs unités de traitement (101) ; et
une unité de stockage (102) sur laquelle sont stockés un ou plusieurs programmes qui, lorsqu'ils sont exécutés par les une ou plusieurs unités de traitement (101), amènent les une ou plusieurs unités de traitement (101) à réaliser le procédé de contrôle de stockage selon l'une quelconque des revendications 1 à 7.

9. Puce de stockage, comprenant :
le contrôleur de stockage (201) selon la revendication 8 ; et
une mémoire (202).

10. Carte de réseau, comprenant :
une puce de contrôle principale (301) et une puce de stockage (302),
dans laquelle la puce de stockage (302) comprend le contrôleur de stockage selon la revendication 8.

11. Moyen lisible par ordinateur stockant un programme informatique qui, lorsqu'il est exécuté par un processeur, amène le processeur à réaliser le procédé de contrôle de stockage selon l'une quelconque des revendications 1 à 7.
